# NEUE EUROPÄISCHE PATENTSCHRIFT

(11) **EP 0 265 601 B2**
(45) Veröffentlichungstag und Bekanntmachung des Hinweises auf die Entscheidung über den Einspruch: **27.07.1994**
(45) Hinweis auf die Patenterteilung: 04.03.1992
(21) Anmeldenummer: 87111096.1
(22) Anmeldetag: 31.07.1987
(51) Int. Cl.: A23P 1/14, A23P 1/12, B30B 11/00

(54) **Verfahren und Vorrichtung zum Extrudieren eines Lebensmittelprodukts**
Process and apparatus for foodstuff extrusion
Procédé et appareil d'extrusion d'un produit alimentaire

(30) Priorität: 30.10.1986 DE 3636867
(43) Veröffentlichungstag der Anmeldung: 04.05.1988
(73) Patentinhaber: Werner & Pfleiderer GmbH, 70469 Stuttgart (DE)
(72) Erfinder: Wiedmann, Werner, Dr.-Ing., D-7000 Stuttgart 31 (DE)
(74) Vertreter: Schneck, Herbert, Dipl.-Phys., Dr.

(56) Entgegenhaltungen:
- EP-A- 0 063 825
- EP-B- 0 040 406
- DE-A- 2 850 910
- DE-A- 3 341 090
- FR-A- 1 301 405
- US-A- 4 373 434
- PATENT ABSTRACTS OF JAPAN, Band 11, Nr. 47 (C-403)[2494], 13. Februar 1987; & JP-A-61 212 270 (SHOKUHIN SANGYO EKUSUTORUUJOHN KATSUKINGU GIJUTSU KENKYU KUMIAI) 20-09-1986
- STARCH (STÄRKE), Band 36, Nr. 7, Juli 1984, Seiten 228-231, Verlag Chemie GmbH, Weinheim, DE; C. MILLAUER et al.: "Einsatz von Extrudern in der Stärke-Industrie"
- FOOD TECHNOLOGY, Band 38, Nr. 2, Februar 1984, Seiten 56-61; R.C. MILLER: "Effect of wear on twin-screw extruder performance"
- JOURNAL OF FOOD SCIENCE, Band 50, Nr. 1, Januar-Februar 1985, Seiten 249-253; R.C. MILLER: "Low moisture extrusion: effects of cooking moisture on product characteristics"
- Starch/Stärke 34 (1982) Nr. 11, Seiten 366-372, Verlag Chemie GmbH, Weinheim
- Süsswaren 12/82, Seiten 400-406, K. Seiler "Ein Überblick: Der gegenwärtige Stand der Extrudertechnologie"
- Plastics Engineering, Oct. 1983, Seiten 19-25, Angelo Notte: "User-friendly microprocessors are talking plastics"

## Beschreibung

Die Erfindung richtet sich auf ein Verfahren und eine Vorrichtung zum Extrudieren eines Lebensmittelprodukts nach dem Oberbegriff von Anspruch 1 bzw. 7 und 9.

Bei derartigen Verfahren und Vorrichtungen werden Biopolymere, wie z.B. Stärken oder Proteine, in wenigen Sekunden im wesentlichen durch Einwirkung von Scherkräften druckgekocht und zu einer schaumigen Struktur expandiert. Man spricht deshalb auch von "Kochextrusion".

Aus der DE-OS 33 41 o9o ist ein derartiges Verfahren zur Nahrungsmittelextrusion aus Stärketrägern und Proteinen bekannt, bei welchem am Beginn des Förderweges der Extrusionsvorrichtung eine dosierte Wasserzugabe mittels Durchflußregeleinrichtungen erfolgt. Die Zudosierung von Wasser erfolgt dabei jedoch ausschließlich unter dem Gesichtspunkt der Einstellung eines bestimmten Wassergehaltes.

Aus der US-PS 3 711 296 ist es bekannt, den natürlichen Wassergehalt des Rohstoffes durch eine entsprechende Wasserzugabe zu erhöhen. Durch eine Veränderung der Schraubendrehzahl des Extruders wird versucht, Druckund Temperaturbedingungen einzustellen, unterwelchen eine fürdie Extrusion erforderliche Plastifizierung stattfindet. Darüber hinaus ist es aus dieser Druckschrift an sich bekannt, in der zweiten Extruderhälfte eine Ausdampfzone vorzusehen oder alternativ hierzu einen Abzug längs des Extruders. Dieser Abzug erfolgt zu dem Zweck, daß der während der Plastifizierung abgegebene Wasserdampf möglichst vollständig entfernt wird.

Ein Grundproblem bei derartigen Kochextrusionsvorgängen liegt darin, daß neben den starken Schwankungen des Wassergehalts der biologischen Rohstoffe auch solche im Fett- und Zellulosegehalt auftreten, wodurch die Produktqualität, z.B. Härte, Dichte, Wasserlöslichkeit und -Vikosität, Farbe und Geschmack, verändert werden, wobei denselben negativen Effekt auch Schwankungen in der Einzelkomponentendosierung, bei Anfahrvorgängen und in der Temperatur der Rohstoffe bedingen.

Hiervon ausgehend liegt der Erfindung die Aufgabe zugrunde, ein Verfahren und eine Vorrichtung aufzuzeigen, durch welche möglichst viele derartige wechselnde Einflüsse unter Erzielung eines unabhängig hiervon eine gleichbleibende Qualität aufweisenden Produkts ausgeglichen werden können.

Der Erfindung liegt dabei die Erkenntnis zugrunde, daß aufgrund der physikalischen und chemischen Modifizierung des Biopolymers durch Scherung und Wärmetransport beim Kochextrusionsvorgang alle Endqualitätsparameter ganz entscheidend von der massenspezifischen, mechanischen Energiezufuhr, von der Verweilzeit im Extruder und von dem Produkttemperaturprofil längs des Extruders abhängen. Dementsprechend bedingt die zu fordernde konstante Verweilzeitverteilung, daß die Schneckendrehzahl und der Massestrom des Biopolymers konstant gehalten werden ebenso wie nach Möglichkeit die Druckverhältnisse vor der Extrusionsdüse.

Die spezifische mechanische Energiezufuhr ist dabei definiert als Quotient aus Nettoantriebsleistung und Gesamtmassenstrom. Aus dem Kautschuk- und Kunststoffbereich ist eine Steuerung der eingeleiteten spezifischen Energie über die Drehzahl bekannt, um auf diese Weise eine konstante Dispersionsqualität zu erhalten. Darüber hinaus spielt dort eine Einflußnahme auf die Temperatur über die Gehäusetemperierung eine Rolle. Wegen der bei der Kochextrusion - wie dargelegt - zu fordernden konstanten Verweilzeit ist eine Konstanthaltung der spezifischen Energieeinleitung über die Drehzahl dort nicht möglich. Die Verweilzeiten bei hoher Temperatur sind darüber hinaus bei der Kochextrusion so kurz, daß die Gehäusetemperierung lediglich einen untergeordneten Einfluß haben kann.

Die erfindungsgemäße Aufgabe wird gelöst durch ein Verfahren nach Anspruch 1, wonach bei konstanter Wellendrehzahl des Extruders die von dem Antriebsmotor der Welle bzw. Wellen aufgebrachte Antriebsleistung und der Massedurchsatz der zugeführten Ausgangsprodukte gemessen, in einer Recheneinrichtung der Quotient der sogenannten Größen gebildet und diese derart bestimmte spezifische Energie als Regelgröße eine Regeleinrichtung zugeführt werden, welche diese entsprechend einem vorgegebenen Sollwert derart konstant hält, daß als Stellgröße durch die Regeleinrichtung die Wasserzufuhr zu der Mischzone des Extruders und/oder eine Dampfzufuhr beeinflußt werden.

Das Wesen dieses Verfahrens liegt darin, daß die spezifische Energieeinleitung bei einem Kochextrusionsvorgang gemessen und dadurch konstant gehalten wird, daß die Zudosierung von Wasser verändert wird bzw. daß eine geregelte Dampfzufuhr vorgenommen wird.

Hierdurch werden Feuchtschwankungen im Produkt voll ausgeregelt und Schwankungen des Fett-, Zucker- oder Zellulosegehaltes im Produkt und in der Dosierung werden in der Tendenz richtig ausgeregelt. Erfindungsgemäß entscheidend ist also letztlich der Gedanke, die spezifische Energiezufuhr über die Feuchtigkeit des im Extruder befindlichen Produkts konstant zu halten. Die Regelung kann zwischen o und 50% Wassergehalt erfolgen.

Dies kann am einfachsten durch eine Einstellung der Wasserzufuhr gemäß Anspruch 2 erfolgen, wobei bei dieser Art der Regelung mit einer Einstellung der Wasserzufuhr durch Veränderung der Drehzahl der Zuführpumpe die Produkttemperatur im Extruder nicht wesentlich beeinflußt wird. Eine derartige Temperaturbeeinflussung geht mit der ebenfalls möglichen Dampfzufuhr bzw. dem Dampfabzug einher.

Eine besonders konstante Produktqualität wird durch die überlagerte Regelung gemäß Anspruch 3 erreicht, wonach einer die spezifische Energiezufuhr über die Einstellung der Wasserzufuhr konstant haltenden Regelung eine Regelung überlagert ist, durch welche die Produkttemperatur als Regelgröße durch entsprechende Einstellung des Dampfabzugs oder der Dampfzugabe geregelt wird. Diese Regelung vermag den ganz überwiegenden Teil aller auftretenden Schwankungen auszugleichen.

Dampfabzug und -zufuhr erfolgen vorteilhafterweise gemäß Anspruch 4, wonach der geregelte Dampfabzug aus dem Bereich nach der Plastifizierzone und die geregelte Dampfzugabe in den Bereich vor der Plastifizierzone erfolgen.

Durch diese überlagerte Regelung unter Dampfzufuhr und Dampfabzug an den entsprechenden Stellen des Extruders wird sichergestellt, daß das Produkttemperaturprofil konstant bleibt, vor allem an der Stelle höchster Temperatur, d.h. in der Regel vor der Düse.

Die letzten drei Sekunden in der Kochzone bestimmen entscheidend, ob thermische Veränderungen und Schädigungen des Extrutates auftreten. Die vorgesehene Regelung erfolgt vorzugsweise zwischen 50 mbar und 20 bar.

Über die vorgesehenen Regeleingriffe hinsichtlich Energie und Temperatur ändert sich die Produktfeuchte im Extruder und damit über die Viskosität der Düsendruckverlust. Dies kann in manchen Fällen zu einer unzulässigen Veränderung der Druckrückströmung und der Verweilzeitverteilung führen, weshalb zur Konstanthaltung dieser Parameter eine Regelung über eine mechanische Produktdrossel gemäß Anspruch 5 vorgesehen sein kann, wonach der Druck vor einer der Extrusionsdüse des Extruders vorgelagerten mechanischen Produktdrosseleinrichtung gemessen und durch Einstellung dieser Produktdrosseleinrichtung konstant gehalten wird.

Lediglich zur Unterstützung der erfindungsgemäßen Regelvorgänge und zur Erzielung eines gewünschten Temperaturprofils längs des Extruders kann gemäß Anspruch 6 eine abschnittsweise, geregelte Temperierung des Gehäusemantels vorgesehen sein.

Die Ansprüche 7 bis 12 betreffen eine Vorrichtung zur Durchführung des Verfahrens, wobei sich Anspruch 7 auf die Realisierung eines Regelkreises mit geregelter Wasserzufuhr bezieht. Nach diesem Anspruch umfaßt die Vorrichtung einen Extruder, Zuführeinrichtungen zur Zuführung von Ausgangsprodukten und Wasser in einer Mischzone des Extruders, einen elektrischen Antriebsmotor für die Welle oder die Wellen des Extruders. Es sind eine Einrichtung zur Messung der Leistungsaufnahme des Antriebsmotors, Einrichtungen zur Bestimmung des Durchsatzes der Ausgangsprodukte, Einrichtungen zur veränderlichen Dosierung des zugeführten Wassers und/oder Dampfes sowie eine mit den Einrichtungen zur Bestimmung des Durchsatzes der zugeführten Ausgangsprodukte und der Einrichtung zur Erfassung der Leistungsaufnahme verbundene Recheneinrichtung vorgesehen, welche mit einer Regeleinrichtung verbunden ist, wobei der Ausgang der Regeleinrichtung die Einstellung der Einrichtung zur dosierbaren Wasserzufuhr und/oder Dampfzufuhr verbunden ist.

Nach der vorteilhaften Weiterbildung der Vorrichtung gemäßAnspruch 8 istfürdie Einrichtung zur dosierbaren, einstellbaren Wasserzufuhr eine Dosierpumpe vorgesehen.

Die im Anspruch 9 angegebene Vorrichtung zur Durchführung des erfindungsgemäßen Verfahrens bezieht sich auf eine Regelung mit regelbarem Dampfabzug. Demnach ist ein bekannter Extruder mit einer Meßeinrichtung im Bereich vor seiner Düse zur Erfassung der Produkttemperatur und einer Dampfabzugsleitung mit einem Dampfdrosselventil im Bereich nach der Plastifizierzone verbunden, wobei die Temperatur-Meßeinrichtung mit dem Eingang einer Regeleinrichtung und deren Ausgang mit dem Dampfdrosselventil verbunden sind.

Die sich auf eine Regelung des Düsendruckes beziehende Weiterbildung der im Anspruch 9 angegebenen Vorrichtung nach Anspruch 10 ist dadurch charakterisiert, daß in dem Bereich vor der Plastifizierzone eine Dampfinjektionsleitung mit einem Dampfdrosselventil angeordnet ist, die mit dem Ausgang der der Temperaturmeßeinrichtung nachgeschalteten Regeleinrichtung verbunden ist.

Gemäß der weiteren vorteilhaften Weiterbildung nach Anspruch 11 ist im Bereich vor der Düse des Extruders eine Druckmeßeinrichtung vor einer mechanischen Produktdrosseleinrichtung angeordnet, wobei die Druckmeßeinrichtung mit dem Eingang einer Regeleinrichtung und deren Ausgang mit einem Stellmotor der mechanischen Produktdrosseleinrichtung verbunden sind.

Wie in Anspruch 12 angegeben, werden die drei angesprochenen Regelkreise einander überlagert und über eine gemeinsame Rechnereinrichtung koordiniert. Dabei kommt der Regelung über die Wasserzufuhr aufgrund des mechanischen und exponentiell-thermischen Einflusses auf das Produkt die größte Bedeutung zu. Für sich genommen weniger einflußreich ist die Regelung über Dampfzufuhr und Dampfabzug wegen des lediglich exponentiell-thermischen Einflusses. Am wenigsten einflußreich und deshalb für viele praktische Anwendungsfälle entbehrlich ist die Regelung über eine variable Drosselung vor der Düse, da diese nur einem linearen thermischen Einfluß unterliegt.

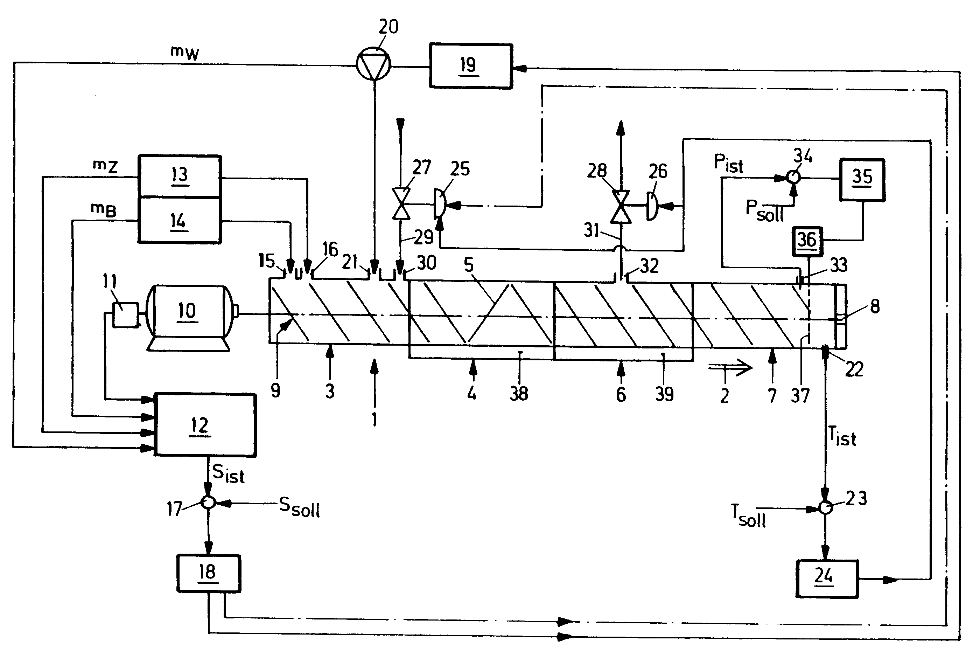

Weitere Merkmale, Vorteile und Einzelheiten der Erfindung ergeben sich aus der folgenden Beschreibung einer bevorzugten Ausführungsform der Erfindung anhand der Zeichnung. Diese zeigt eine schematische, schaltbildartige Darstellung einer Kochextrusionsvorrichtung mit den erfindungsgemäß vorgesehenen Meß- und Regelkreisen.

In der Zeichnung ist ein Extruder 1 dargestellt, welcher in Förderrichtung (Pfei 2) nacheinander eine Mischzone 3, eine Plastifizierzone 4 mit Rückförderelementen 5, eine Kochzone 6 und eine Extrusionszone 7 umfaßt, an welche sich eine Extrusionsdüse 8 anschließt.

Die Schnecken 9 des zweiwelligen SchneckenExtruders 1 werden durch einen Motor 1o angetrieben. Durch eine Leistungsmeßeinrichtung 11 wird die Leistungsaufnahme N des Motors 1o erfaßt und an eine zentrale Recheneinrichtung 12 weitergegeben. Am Beginn des Extruders 1 sind Produkt-Dosiereinrichtungen 13, 14 angeordnet, welche über Einlässe 15, 16 Ausgangsprodukte wie Zucker mit einem Durchsatz m_{z} und Biopolymer mit einem Durchsatz m_{B} dem Extruder zuführen. Weiterhin wird dem Extruder Wasser mit einem Durchsatz mW zugeführt. Die Größen m_{z}, m_{B} und m_{w} werden der zentralen Recheneinrichtung 12 zugeleitet, welche hieraus in Verbindung mit der jeweiligen Antriebsleistung die jeweils auf den Produktdurchsatz bezogene spezifische eingeleitete Energie ermittelt gemäß 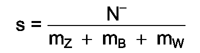 (Die Größen m_{B}, m_{z} und m_{w} haben die Dimension Masse pro Zeit).

Die zentrale Recheneinrichtung 12 gibt den derart ermittelten Istwert der spezifischen Energie s aus, welcher an einer Vergleichstelle 17 mit dem dort ebenfalls vorgegebenen Sollwert verglichen wird. Die Differenz dient als Regelgröße für den Eingang einer Regeleinrichtung 18. Der Ausgang der Regeleinrichtung 18 ist verbunden mit einer Stelleinrichtung 19für die Drehzahl einer Wasser-Dosierpumpe 2₀, welche Wasser über einen Einlaß 21 in den Extruder 1 dosiert. Hierdurch wird ein erster Regelkreis gebildet, welcher die in das Mischgut in dem Extruder 1 eingeleitete spezifische Energie entsprechend der Sollwertvorgabe S_{Soll} dadurch konstant hält, daß die Menge des zudosierten Wassers und damit die Viskosität der Extruderfüllung verändert wird.

Ein zweiter Regelkreis wird gebildet durch eine in dem Bereich vor der Drosselklappe 37 angeordnete Temperatursensoreinrichtung 22, welche den gemessenen Temperatur-Istwert T_{Ist} einer Vergleichsstelle 23 zuführt, an welcher dieser Wert mit einem vorgegebenen Temperatur-Sollwert T_{Soll} verglichen wird, wobei die Differenz dem Eingang einer Regeleinrichtung 24 aufgegeben wird. Über den Ausgang der Regeleinrichtung 24 werden Stelleinrichtungen 25 bzw. 26 für Dampfdrosselventile 27 bzw. 28 gestellt, durch welche über eine Einlaßleitung 29 und einen Einlaß 3o entweder Heißdampf vor der Plastifizierzone 4 injiziert oder über eine Leitung 31 und einen Auslaß 32 Dampf nach der Plastifizierzone abgezogen werden kann, um auf diese Weise die Temperatur des verarbeiteten Produkts konstant zu halten.

Ein dritter Regelkreis wird gebildet durch einen Drucksensor 33 im Bereich vor der Drosselklappe 37, welcher einen Druck-Istwert P_{Ist} ermittelt, welcher an einer Vergleichsstelle 34 mit einem DruckSollwert P_{Soll} verglichen wird. Die Differenz dient als Regelgröße für den Eingang einer Regeleinrichtung 35, deren Ausgang mit einer Stelleinrichtung 36 für eine vor der Düse 8 angeordnete, winkelverstellbare, lediglich schematisch-gestrichelt angedeutete Drosselklappe 37 dient. Je nach Veränderung der winkelstellung der Drosselklappe 37 können die Druckverhältnisse verändert werden.

Die Regeleinrichtungen 18, 24 und 35 bzw. die Vergleichsstellen 17, 23, 34 sind - wie im einzelnen nicht dargestellt - mit der zentralen Recheneinrichtung 12 verbunden und werden von dieser koordiniert angesteuert.

Die Ausregelung von Störungen über die drei in Betracht stehenden Regelkreise wird nachfolgend beschrieben.

Im Bereich der Plastifizierzone 4 und Kochzone 6 können zusätzlich schematisch eingezeichnete Gehäusetemperiereinrichtungen 38 bzw. 39 vorgesehen sein. Über diese kann ein gewünschtes Temperaturprofil über im einzelnen nicht dargestellte Regeleinrichtungen geregelt vorgegeben werden.

Die vorstehend beschriebene Vorrichtung kann unter Anwendung des erfindungsgemäßen Verfahrens zur Herstellung ganz unterschiedlicher Lebensmittelprodukte verwendet werden. Beispielsweise sind in diesem Zusammenhang zu nennen Frühstückscerealien, Snacks, Getreideflocken aus Pellets, Flachbrot, Quellmehl, physikalisch und chemisch modifizierte Stärken, Entkeimung von Gewürzen, Ölsaaten, Getreide, texturierte Planzenproteine, Lakritz- und Weingummistränge, Heimtierfutter, Reaktion von Casein zu Caseinat und Alkalisierung von Kakao.

Als spezielles Anwendungsbeispiel wird nachstehend die Herstellung eines granulierten Maissnack in Betracht gezogen.

Es wird hierzu ein gleichsinnig drehender Zweiwellenextruder ZSK7o, mit 7o mm Schneckendurchmesser und einer Drehzahl von 2oo UpM verwendet. Der Maismehldurchsatz beträgt 2oo kg/h, die Zusatzwasser-Zugabe 12 kg/h. Die Leistungsaufnahme des Extruders beträgt 8,5 KW. Die Gehäusetemperierung erfolgt geregelt auf 14o°C. Die spezifische Energieeinleitung wird auf 48o KJ/kg festgelegt. Der Druck vor der mechanischen Produktdrosseleinrichtung beträgt 73 bar, die Temperatur vor der Düse 17o°C.

Ausgehend von diesen Basisbedingungen wird nachfolgend der Einsatz der erfindungsgemäßen Vorrichtung bzw. des erfindungsgemäßen Verfahrens beim Auftreten von Störungen verschiedener Art veranschaulicht.

### 1. Beispiel:

Ein Verschleiß der Schnecken reduziert den äußeren Schneckendurchmesser nach 8₀₀₀ Stunden Betriebszeit um 2 mm. Hierdurch steigt die spezifische Energiezufuhr auf 5o KJ/kg, der Druck auf 93 bar, die Produkttemperatur auf 17o°C. Dies kann erfindungsgemäß dadurch ausgeregelt werden, daß die Stellgröße "Wasserzufuhr" um 2,5 Liter pro Stunde erhöht und die Stellgröße "Drosselstellung" der mechanischen Produktdrossel von einem Öffnungswinkel von 3₀° auf 15 reduziert wird.

### 2. Beispiel:

Es tritt eine Rohstoffschwankung in Form einer Erhöhung der Ausgangsprodukffeuchte um 2,5 % entsprechend 5 Liter pro Stunde ein. Dabei sinkt die Energieeinleitung auf 418 KJ/kg, der Druck auf 55 bar, die Temperatur auf 161 °C. Zur Ausregelung wird die Stellgröße "Wasserzufuhr" um 5 Liter pro Stunde reduziert.

### 3. Beispiel:

Eine Erhöhung des Rohstoff-Fettgehaltes um 2 % tritt ein. Hierdurch sinkt die Energieeinleitung auf 465 KJ/kg, der Druck steigt auf 77 bar, die Temperatur sinkt auf 168°C. Erfindungsgemäß erfolgt eine Ausregelung dadurch, daß die Stellgröße "Dampfabzug" vergrößert wird, z.B. von 2o % der freien Druchtrittsöffnung auf 36 %, und durch eine Öffnung der mechanischen Produktdrossel von 3₀° Öffnungswinkel auf 53°. Die Energieregelung tritt hier nur vorübergehend in Kraft, um die Ausregelung zu beschleunigen. Danach geht die Wasserzufuhr auf ihren alten Wert zurück.

### 4. Beispiel:

Die drei vorstehend genannten Größen treten einander überlagert auf. Erfindungsgemäß wird eine Korrektur durch eine überlagerte Regelung vorgenommen, wobei drei Stellgrößen gleichzeitig verändert werden, indem die Wasserzufuhr um 2,5 Liter pro Stunde reduziert, der Dampfabzug von 2₀% der freien Druchtrittsöffnung auf 36% erhöht und die Drosseleinstellung von 3₀° auf 38° vergrößert wird.

## Patentansprüche

1. Verfahren zum Extrudieren eines Lebensmittelsprodukts, wobei einem Extruder (1) Ausgangsproute und Wasser zugeführt und in einer Mischzone (3) vermischt werden, und wobei die Mischung durch Zufuhr von Scherenergie erhitzt und plastifiziert und nach Passieren einer Düse (8) aufgeschäumt wird, dadurch gekennzeichnet, daß bei konstanter Wellendrehzahl des Extruders (1) die von dem Antriebsmotor der Welle bzw. Wellen aufgebrachte Antriebsleistung (N) gemessen wird, daß der Massedurchsatz (m) der zugeführten Ausgangsprodukte gemessen wird, daß in einer Recheneinrichtung (12) der Quotient (s) dieser Größen (N, m) gebildet wird, und daß diese derart bestimmte spezifische Energie (s) als Regelgröße einer Regeleinrichtung (18) zugeführt wird, welche diese entsprechend einem vorgegebenen Sollwert (s_{Son}) derart konstant hält, daß als Stellgröße durch die Regeleinrichtung (18) die Wasserzufuhr zu der Mischzone (3) des Extruders (1) und/oder eine Dampfzufuhr beeinflußt werden.

2. Verfahren nach Anspruch 1, dadurch gekennzeichnet, daß die Einstellung der Wasserzufuhr durch Veränderung der Drehzahl einer Zuführpumpe (20) erfolgt.

3. Verfahren nach Anspruch 1 oder 2, dadurch gekennzeichnet, daß einer die spezifische Energiezufuhr über die Einstellung der Wasserzufuhr konstant haltenden Regelung eine Regelung überlagert ist, durch welche die Produkttemperatur als Regelgröße durch entsprechende Einstellung des Dampfabzugs oder der Dampfzugabe geregelt wird.

4. Verfahren nach Anspruch 3, dadurch gekennzeichnet, daß der geregelte Dampfabzug aus dem Bereich nach der Plastifizierzone (4) und die geregelte Dampfzugabe in den Bereich vor der Plastifizierzone (4) erfolgen.

5. Verfahren nach einem der Ansprüche 1 bis 4, dadurch gekennzeichnet, daß der Druck vor einer der Extrusionsdüse (8) des Extruders (1) vorgelagerten mechanischen Produktdrosseleinrichtung gemessen und durch Einstellung dieser Produktdrosseleinrichtung Drosselklappe 37 konstant gehalten wird.

6. Verfahren nach einem der Ansprüche 1 bis 5, dadurch gekennzeichnet, daß Gehäuseabschnitte des Gehäuses des Extruders (1) über den Gehäusemantel temperiert werden.

7. Vorrichtung zum Extrudieren eines Lebensmittelprodukts umfassend einen Extruder (1), Zuführeinrichtungen zur Zuführung der Ausgangsprodukte und des Wassers in eine Mischzone (3) des Extruders (1), und einen elektrischen Antriebsmotor (10) für die Welle oder die Wellen des Extruders (1), gekennzeichnet durch eine Einrichtung (11) zur Messung der Antriebsleistung (N) des Antriebsmotors (10) bei konstanter Wellendrehzahl, durch Einrichtungen zur Bestimmung des Massedurchsatzes (m) der Ausgangsprodukte, durch Einrichtungen zur veränderlichen Dosierung des der Mischzone (3) zugeführten Wassers und/oder Dampfes, durch eine mit den Einrichtungen zur Bestimmung des Durchsatzes (m) der zugeführten Ausgangsprodukte und der Einrichtung (11) zur Erfassung der Antriebsleistung (N) verbundene Recheneinrichtung (12) zur Bildung des Quotienten (s) dieser Größen (N,m), welche Recheneinrichtung (12) zur Zuführung der derart bestimmten spezifischen Energie (s) als Regelgröße zu einer Regeleinrichtung (18) mit dieser verbunden ist, welche Regeleinrichtung (18) die spezifische Energie (s) entsprechend einem Sollwert (s_{Son}) konstant hält, wobei der Ausgang der Regeleinrichtung (18) mit der Einrichtung zur dosierbaren Wasserzufuhr und/oder Dampfzufuhr verbunden ist, um als Stellgröße die Wasserzufuhr zu der Mischzone (3) des Extruders (1) und/oder die Dampfzufuhr zu beeinflussen.

8. Vorrichtung nach Anspruch 7, dadurch gekennzeichnet, daß die Einrichtung zur dosierbaren, einstellbaren Wasserzufuhr eine Dosierpumpe (20) ist.

9. Vorrichtung zur Durchführung des Verfahrens nach einem der Ansprüche 1 bis 6 umfassend einen Extruder (1), Zuführeinrichtungen zur Zuführung von Ausgangsprodukten und Wasser in einer Mischzone (3) des Extruders (1), einen elektrischen Antriebsmotors (10) für die Welle oder die Wellen des Extruders (1), gekennzeichnet durch eine Meßeinrichtung (Temperatur-sensoreinrichtung 22) im Bereich vor der Düse (8) des Extruders (1) zur Erfassung der Produkttemperatur und eine Dampfabzugsleitung (31) mit einem Dampfdrosselventil (28) im Bereich nach der Plastifizierzone (4), wobei die Temperatur- Meßeinrichtung (Temperatur-sensoreinrichtung 22) mit dem Eingang einer Regeleinrichtung (24) verbunden ist, und der Ausgang der Regeleinrichtung mit dem Dampfdrosselventil (28) verbunden ist.

10. Vorrichtung nach Anspruch 9, dadurch gekennzeichnet, daß in dem Bereich vorder Plastifizierzone (4) eine Dampfinjektionsleitung (29) mit einem Dampfdrosselventil (27) angeordnet ist, die mit dem Ausgang der der Temperaturmeßeinrichtung (Temperatur-sensoreinrichtung 22) nachgeschalteten Regeleinrichtung (24) verbunden ist.

11. Vorrichtung nach einem der Ansprüche 7 bis 10, dadurch gekennzeichnet, daß im Bereich vor der Düse (8) eine Druckmeßeinrichtung (Drucksensor 33) vor einer mechanischen Produktdrosseleinrichtung (Drosselklappe 37) angeordnet ist, wobei die Druckmeßeinrichtung (Drucksensor 33) mit dem Eingang einer Regeleinrichtung (35) verbunden ist, und wobei der Ausgang der Regeleinrichtung (35) mit einem Stellmotor (Stelleinrichtung 36) der mechanischen Produktdrosseleinrichtung (Drosselklappe 37) verbunden ist.

12. Vorrichtung nach einem der Ansprüche 7 bis 11, dadurch gekennzeichnet, daß die Regeleinrichtungen (18,24,35) mit der Recheneinrichtung (12) verbunden sind.

## Claims

1. A method of extruding a food product wherein starting products and water are fed to an extruder (1) and mixed in a mixing zone (3) and wherein the mixture is heated and plastified by the supply of shearing energy and is foamed after passing through a nozzle (8), characterised in that the drive power (N) applied by the drive motor to the shaft or shafts is measured at a constant speed of rotation of the shaft or shafts of the extruder (1), that the bulk throughput (m) of the starting products fed in is measured, that the quotient (s) of these quantities (N, m) is formed in a computing device (12) and that this specific energy (s) thus determined is fed as the controlled condition to a controller (18) which keeps this constant in accordance with a preset desired value (s_{Son}) in such a manner that the supply of water to the mixing zone (3) of the extruder (1) and/or a supply of steam is influenced as a correcting variable by the controller (18).

2. A method as claimed in claim 1, characterised in that the adjustment of the supply of water is effected by varying the speed of rotation of a feed pump (20).

3. A method as claimed in claim 1 or 2, characterised in that a control whereby the product temperature is controlled as a controlled condition by appropriate adjustment of the offtake of steam or the addition of steam is superimposed on a control keeping the specific energy supply constant through the adjustment of the supply of water.

4. A method as claimed in claim 3, characterised in that the controlled offtake of steam is effected from the region after the plastifying zone (4) and the controlled addition of steam is effected in the region before the plastifying zone (4).

5. A method as claimed in one of the claims 1 to 4, characterised in that the pressure in front of a mechanical product restricting device mounted in front of the extrusion nozzle (8) of the extruder (1) is measured and kept constant by adjusting this product restricting device (throttle valve 37).

6. A method as claimed in one of the claims 1 to 5, characterised in that housing portions of the housing of the extruder (1) are given a certain temperature through the housing casing.

7. An apparatus for extruding a food product comprising an extruder (1), feed devices for feeding the starting products and the water into a mixing zone (3) of the extruder (1) and an electric drive motor (10) for the shaft or shafts of the extruder (1), characterised by a device (11) for measuring the drive power (N) of the drive motor (10) at a constant speed of rotation of the shaft or shafts, by devices for determining the bulk throughput (m) of the starting products, by devices for the variable proportioning of the water and/or steam fed to the mixing zone (3), by a computing device (12), which is connected to the devices for determining the throughput (m) of the starting products supplied and the device (11) for detecting the drive power (N), to form the quotient (s) of these quantities (N, m) and which computing device (12) is connected to a controller (18) for feeding the specific energy (s) thus determined as a controlled condition to the controller (18) which keeps the specific energy (s) constant in accordance with a preset desired value (sSon), the output of the controller (18) being connected to the device for the proportionable supply of water and/or steam so as to influence, as a correcting variable, the sppply of water to the mixing zone (3) of the extruder (1) and/or the supply of steam.

8. An apparatus as claimed in claim 7, characterised in that the device for the adjustable supply of water which can be proportioned is a proportioning pump (20).

9. An apparatus for carrying out the method as claimed in one of the claims 1 to 6 comprising an extruder (1), feed devices for feeding starting products and water into a mixing zone (3) of the extruder (1), an electric drive motor (10) for the shaft or shafts of the extruder (1), characterised by a measuring device (temperature sensor 22) in the region before the nozzle (8) of the extruder (1) to detect the temperature of the product and a steam offtake pipeline (31) with a steam throttle valve (28) in the region after the plastifying zone (4), the temperature measuring device (temperature sensor 22) being connected to the input of a controller (24) and the output of the controller being connected to the steam throttle valve (28).

10. An apparatus as claimed in claim 9, characterised in that disposed in the region before the plastifying zone (4) is a steam injection pipeline (29) with a steam throttle valve (27) which is connected to the output of the controller (24) following the temperature measuring device (temperature sensor 22).

11. An apparatus as claimed in one of the claims 7 to 10, characterised in that a pressure measuring device (pressure sensor 33) is disposed before a mechanical product restricting device (throttle valve 37), before the nozzle (8), the pressure measuring device (pressure sensor 33) being connected to the input of a controller (35) and the output of the controller (35) being connectd to a servo motor (regulating unit 36) of the mechanical product restricting device (throttle valve 37).

12. An apparatus as claimed in one of the claims 7 to 11, characterised in that the controllers (18, 24, 35) are connected to the computing device (12).

## Revendications

1. Procédé pour l'extrusion d'un produit alimentaire, des produits de base et de l'eau étant amenés à une extrudeuse (1) où ils sont mélangés dans une zone de mélange (3), et le mélange étant échauffé et rendu plastique par la fourniture d'énergie de cisaillement, puis transformé en mousse après passage dans une buse (8), caractérisé en ce qu'à vitesse de rotation constante de l'extrudeuse (1), on mesure la puissance d'entraînement (N) fournie par le moteur d'entraînement à l'arbre ou aux arbres, en ce que l'on mesure le débit massique (m) des produits de base amenés, en ce que dans un calculateur (12) est formé le quotient (s) de ces grandeurs (N, m), et en ce que cette énergie spécifique (s) ainsi déterminée est délivrée en tant que grandeur de réglage à un dispositif de régulation (18) qui maintient celle-ci constante selon une valeur de consigne (S_{cons}) prédéfinie, par le fait que le dispositif de régulation (18) influence en tant que grandeur de réglage, l'apport d'eau à la zone de mélange (3) de l'extrudeuse (1) et/ou un apport de vapeur.

2. Procédé selon la revendication 1, caractérisé en ce que le réglage de l'apport d'eau s'effectue par la modification de la vitesse de rotation d'une pompe d'alimentation (20).

3. Procédé selon la revendication 1 ou 2, caractérisé en ce qu'à une régulation maintenant constant l'apport d'énergie spécifique par réglage de l'apport d'eau, est superposée une régulation par laquelle la température du produit est régulée en tant grandeur de réglage, grâce à un réglage approprié de l'aspiration de vapeur ou de l'apport de vapeur.

4. Procédé selon la revendication 3, caractérisé en ce que l'aspiration régulée de la vapeur s'effectue dans la zone située après la zone de passage à la phase plastique (4), et l'apport régulé de vapeur s'effectue dans une zone située avant la zone de passage à la phase plastique (4).

5. Procédé selon l'une des revendications 1 à 4, caractérisé en ce que la pression en amont d'un dispositif à étranglement de réglage pour le produit, qui précède la buse d'extrusion (8) de l'extrudeuse (1), est mesurée et maintenue constante par le réglage de ce dispositif à étranglement de réglage pour le produit (clapet d'étranglement 37).

6. Procédé selon l'une des revendications 1 à 5, caractérisé en ce que des tronçons de carter du carter de l'extrudeuse (1) sont tempérés par l'intermédiaire de l'enveloppe de carter.

7. Appareil pour l'extrusion d'un produit alimentaire, comportant une extrudeuse (1), des dispositifs d'alimentation pour l'apport des produits de base et de l'eau dans une zone de mélange (3) de l'extrudeuse (1) et un moteur électrique d'entraînement (10) pour l'arbre ou les arbres de l'extrudeuse (1), caractérisé par un dispositif (11) pour mesurer la puissance d'entraînement (N) du moteur d'entraînement (10) à vitesse de rotation constante de l'arbre ou des arbres, par des dispositifs pour la détermination du débit massique (m) des produits de base, par des dispositifs pour le dosage variable de l'eau et/ou de la vapeur amenée à la zone de mélange (3), par un calculateur (12) qui est relié aux dispositifs pour la détermination du débit (m) des produits de base amenés et au dispositif (11) de détection de la puissance d'entraînement (N) pour former le quotient (s) de ces grandeurs (N, m) et qui est relié à un dispositif de régulation (18) pour délivrer l'énergie spécifique (s) ainsi déterminée en tant que grandeur de réglage au dispositif de régulation (18) qui maintient l'énergie spécifique (s) constante selon une valeur de consigne (s_{cons}) prédéfinie, la sortie du dispositif de régulation (18) étant reliée au dispositif assurant l'apport dosé d'eau et/ou de vapeur pour influencer en tant que grandeur de réglage, l'apport d'eau à la zone de mélange (3) de l'extrudeuse (1) et/ou l'apport de vapeur.

8. Appareil selon la revendication 7, caractérisé en ce que le dispositif pour l'apport d'eau réglable et dosé est constitué par une pompe de dosage (20).

9. Appareil pour la mise en oeuvre du procédé selon l'une des revendications 1 à 6, comportant une extrudeuse (1), des dispositifs d'alimentation pour l'amenée de produits de base et d'eau dans une zone de mélange (3) de l'extrudeuse (1), un moteur électrique d'entraînement (10) pour l'arbre ou les arbres de l'extrudeuse (1), caractérisé par un dispositif de mesure (détecteur de température 22) dans la zone qui précède la buse (8) de l'extrudeuse (1) pour détecter la température du produit et une conduite d'aspiration de vapeur (31) comportant une soupape d'étranglement pour la vapeur (28) située dans la zone après la zone de passage en phase plastique (4), le dispositif de mesure de température (détecteur de température 22) étant relié à l'entrée d'un dispositif de régulation (24) et la sortie du dispositif de régulation étant reliée à la soupape d'étranglement pour la vapeur (28).

10. Appareil selon la revendication 9, caractérisé en ce que dans la zone qui précède la zone de passage à la phase plastique (4), est disposée une conduite d'injection de vapeur (29) qui comporte une soupape d'étranglement pour la vapeur (27), et qui est reliée à la sortie du dispositif de régulation (24) succédant au dispositif de mesure de la température (détecteur de température 22).

11. Appareil selon l'une des revendications 7 à 10, caractérisé en ce que dans la zone qui précède la buse (8), est disposé un dispositif de mesure de pression (détecteur de pression 33) avant un dispositif mécanique d'étranglement pour le produit (clapet d'étranglement 37), le dispositif de mesure de pression (détecteur de pression 33) étant relié à l'entrée d'un dispositif de régulation (35) et la sortie du dispositif de régulation (35) étant reliée à un moteur d'actionnement (dispositif d'actionnement 36) du dispositif mécanique d'étranglement pour le produit (clapet d'étranglement 37).

12. Appareil selon l'une des revendications 7 à 11, caractérisé en ce que les dispositifs de régulation (18, 24, 35) sont reliés a calculateur (12).
